Europäisches Patentamt

European Patent Office

Office européen des brevets

(19)

(11) Veröffentlichungsnummer: **0 143 247**
A1

# (12) EUROPÄISCHE PATENTANMELDUNG

(21) Anmeldenummer: **84111320.2**

(22) Anmeldetag: **22.09.84**

(51) Int. Cl.⁴: **F 16 L 11/12, B 64 F 1/28**

(30) Priorität: **29.10.83 DE 8331111 U**

(43) Veröffentlichungstag der Anmeldung: **05.06.85**
**Patentblatt 85/23**

(84) Benannte Vertragsstaaten: **BE DE FR GB IT SE**

(71) Anmelder: **Continental Gummi-Werke Aktiengesellschaft, Königsworther Platz 1, D-3000 Hannover 1 (DE)**

(72) Erfinder: **Luther, Dietrich, Am Fischerweg 1, D-3540 Korbach (DE)**
Erfinder: **Schwarze, Klaus, Dipl.-Ing., Am Taubenrain 5, D-3540 Korbach (DE)**

(54) **Schlauch, insbesondere Betankungsschlauch.**

(57) Betankungsschläuche auf Flugfeldern und anderen offenen Verkehrsstätten sind in hohem Maße der Gefahr des Überrolltwerdens durch Schwerfahrzeuge mit den daraus folgenden Beschädigungen ausgesetzt. Erfindungsgemäß werden sie wenigstens in den gefährdeten Bereichen (E) mit von jeweils aus mehreren Windungen eines wendelig aufgebrachten schmaleren Streifens (5) einer Kunststoffolie mit eingelagerten lichtreflektierenden Teilchen gebildeten, in gegenseitigen Abständen (L) über die Schlauchlänge verteilten und haftend mit dem Schlauchmantel verbundenen Manschetten versehen. Die Erfindung schafft damit eine besonders im Dunklen auffallende optische Markierung, die ein rechtzeitiges Erkennen und Ausweichen vor einem unbeabsichtigten Überrollen der Schläuche ermöglicht. Die Wendelform der Manschetten (5) vermindert dabei den Arbeitsaufwand und vereinfacht überdies die Vorratshaltung.

0143247

Continental Gummi-Werke Aktiengesellschaft, 3000 Hannover

## Schlauch, insbesondere Betankungsschlauch

Die Neuerung bezieht sich auf aus Gummi oder gummiähnlichem Kunststoff mit in ihre Wandung eingebetteten Verstärkungen hergestellte Schläuche, insbesondere Betankungsschläuche, mit in gegenseitigen Abständen den Schlauchumfang in haftender Verbindung ringartig umspannenden Bandagen aus einer Kunststoffolie mit in regelloser Verteilung eingelagerten Mikroglasteilchen oder anderen lichtreflektierenden Stoffen.

Schläuche dieser Art sind beispielsweise aus dem deutschen Gebrauchsmuster 8 311 837 bekannt. Ihre lichtreflektierende abschnittsweise Bandagierung macht sie besonders zum Einsatz in See- und Lufthäfen und anderen offenen Verkehrsstätten geeignet, weil sie durch Rückstrahlen des Scheinwerferlichtes der Transportfahrzeuge eine auch zur Nachtzeit ins Auge fallende Markierung über den gesamten Leitungsverlauf erhalten, ohne daß es dazu der Aufstellung von Hinweisschildern oder Sperrvorrichtungen bedarf. Die sonst stets bestehende Gefahr des Überrollens ist dadurch mit verhältnismäßig einfachen Mitteln wirksam ausgeschaltet.

Für die Herstellung solcher Schläuche erwies sich die Beschaffung und Bereitstellung der lumineszierenden Folie in den benötigten Breitenabmessungen als problematisch und im Ergebnis häufig unbefriedigend. Der Neuerung liegt demgemäß als Aufgabe zugrunde, mit einer neuartigen Gestaltung der Schläuche die aufgetretenen Schwierigkeiten zu umgehen. Zum Lösen dieser Aufgabe ist nach der Neuerung

0143247

für Schläuche der eingangs geschilderten Gattung vorgesehen, daß die Bandagen von jeweils mehreren Windungen eines wendelig aufgebrachten schmaleren Folienstreifens gebildet sind. Die Windungen sind dabei zweckmäßig mit einer die Breite der Bandagen überschreitenden Ganghöhe aufgebracht, etwa so, daß benachbarte Windungen innerhalb der Bandagen einen Axialabstand in einer der Streifenbreite entsprechenden Größenordnung voneinander aufweisen. Die Anzahl der jeweils eine Bandage bildenden Windungen kann je nach der Größenklasse der Schläuche etwa zwischen drei und acht schwanken. Im allgemeinen sind etwa vier bis sechs Windungen für eine deutliche Kennzeichnung ausreichend.

Die neuerungsgemäßen Schläuche bieten eine den bekannten Schläuchen durchaus gleichwertige Signalwirkung, da die Lumineszenz der einzelnen schmalen Windungen für das menschliche Auge ineinander übergeht und nach dem optischen Eindruck dem einer einheitlichen breiten Manschette entspricht. Im Vergleich zu diesen sind die schmalen Bänder aber wesentlich leichter zu beschaffen und zu Spulen aufgerollt zu handhaben, und ebenso sind auch die Wickelungen selbst mit einem deutlich verminderten Arbeitsaufwand auf die Schlauchrohlinge aufzubringen.

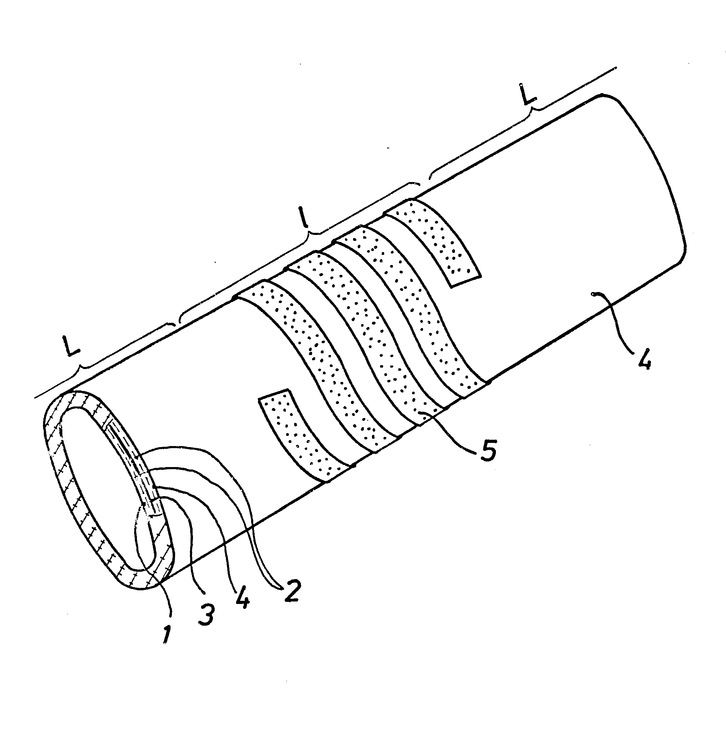

Die Neuerung ist anhand der schematischen Darstellung eines Ausführungsbeispieles in der Zeichnung verdeutlicht. Die einzige Figur der Zeichnung zeigt einen Teilabschnitt eines Betankungsschlauches in perspektivischer Ansicht.

Der gezeichnete Schlauch ist in an sich bekannter Weise aus den drei Hauptkomponenten Innenseele 1, Verstärkungseinlagen 2, 3 und Außenmantel 4 aufgebaut. Die Innenseele 1 ist dabei aus einer treibstoffbeständigen Kautschukmischung hergestellt oder sie enthält eine gegen Lösungsmittel widerstandsfähige Auskleidung, während die für den Aussenmantel 4 verwendete Kautschukmischung vorwiegend nach den im Gebrauch des Schlauches auftretenden mechanischen Beanspruchungen, Abrieb und daneben auch Beständigkeit gegen Schmiermittel, Sonnenbestrahlung u. dgl. zusammengestellt ist. Die Verstärkungseinlagen sind von zwei textilen Geflechtslagen 2 beiderseits einer den Schlauch ge-

0143247

gen Unterdruckbeaufschlagungen stützenden Stahldrahtwendel 3 gebildet. Die Neuerung ist aber nicht auf diese bestimmte Schlauchkonstruktion beschränkt, sondern kann unabhängig von den beschriebenen Einzelheiten in Verbindung mit den verschiedensten Schlauchtypen angewandt werden.

Über die Länge des Schlauches verteilt oder gegebenenfalls auch nur in besonders gefährdeten Abschnitten sind in gegenseitigen Abständen L von vergleichsweise schmalen Bändern in jeweils mehreren Windungen um den Schlauchumfang gewickelte Bandagen 5 angebracht. Die Bänder sind aus einer z.B. mit eingelagerten Mikroglasteilchen hergestellten Kunststoffolie wie etwa Polyvinylchlorid geschnitten und in stoffschlüssiger Verbindung haftend mit dem Schlauchaußenmantel 4 verbunden. Zum Erzielen einer guten Markierungswirkung sind die Streifen in jeweils etwa vier Windungen mit Axialabständen in einer der Streifenbreite entsprechenden Größenordnung aufgebracht, wobei sich eine Gesamtlänge 1 für jede Bandage von mindestens dem Schlauchdurchmesser entsprechender Größenordnung ergibt. Der Abstand L zwischen benachbarten Bandagen kann wesentlich größer gewählt und etwa einem Vielfachen von 1 entsprechend bemessen werden.

0143247

Schutzansprüche:

1. Aus Gummi oder gummiähnlichem Kunststoff mit in seine Wandung eingebetteten Verstärkungen hergestellter Schlauch, insbesondere Betankungsschlauch, mit in gegenseitigen Abständen den Schlauchumfang in haftender Verbindung ringartig umspannenden Bandagen aus einer Kunststoffolie mit in regelloser Verteilung eingelagerten Mikroglasteilchen oder anderen lichtreflektierenden Stoffen, dadurch gekennzeichnet, daß die Bandagen (5) von jeweils mehreren Windungen eines wendelig aufgebrachten schmaleren Folienstreifens gebildet sind.

2. Schlauch nach Anspruch 1, dadurch gekennzeichnet, daß die Windungen innerhalb der Bandagen (5) mit einer ihre Breite überschreitenden Ganghöhe aufgebracht sind.

3. Schlauch nach Anspruch 2, dadurch gekennzeichnet, daß benachbarte Windungen innerhalb der Bandagen (5) einen Axialabstand in einer etwa der Streifenbreite entsprechenden Größenordnung voneinander aufweisen.

4. Schlauch nach den Ansprüchen 1 bis 3, dadurch gekennzeichnet, daß die Bandagen (5) von drei bis zu acht Windungen gebildet sind.

Hannover, den 26. Oktober 1983
83-9 G/Sü                Sü/Lo

0143247

1/1

Continental
Gummi-Werke AG
Hannover

83-9 G

Europäisches
Patentamt

**EUROPÄISCHER RECHERCHENBERICHT**

0143247

Nummer der Anmeldung

EP 84 11 1320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 809 590 (FANTINI) | | F 16 L 11/12 B 64 F 1/28 |
| | --- | | |
| A | GB-A-1 434 015 (POST OFFICE) | | |
| | --- | | |
| A | DE-A-1 802 392 (PLASTICOS TA-TAY) | | |
| | ----- | | |

RECHERCHIERTE
SACHGEBIETE (Int. Cl.4)

F 16 L
B 64 F
A 62 C
G 02 B

Der vorliegende Recherchenbericht wurde für alle Patentansprüche erstellt.

| Recherchenort DEN HAAG | Abschlußdatum der Recherche 29-01-1985 | Prüfer SCHAEFFLER C.A.A. |
|---|---|---|